# EUROPÄISCHE PATENTSCHRIFT

(11) **EP 3 044 049 B1**
(45) Veröffentlichungstag und Bekanntmachung des Hinweises auf die Patenterteilung: **06.11.2019**
(21) Anmeldenummer: 14747958.8
(22) Anmeldetag: 07.08.2014
(51) Int. Cl.: B60S 1/38

(54) **SCHEIBENWISCHVORRICHTUNG MIT VERBESSERTEM KRIECHVERHALTEN**
WINDSHIELD WASHER DEVICE HAVING IMPROVED CREEP BEHAVIOR
DISPOSITIF D'ESSUIE-GLACE À COMPORTEMENT AU FLUAGE AMÉLIORÉ

(30) Priorität: 09.09.2013 DE 102013217983
(43) Veröffentlichungstag der Anmeldung: 20.07.2016
(73) Patentinhaber: Robert Bosch GmbH, 70442 Stuttgart (DE)
(72) Erfinder: HACKL, Viktor, H-9400 Sopron (HU); DEAK, Peter, H-1188 Budapest (HU); WEILER, Michael, 77815 Buehl (DE); GELETA, Attila, H-1145 Budapest (HU)
(86) Internationale Anmeldenummer: PCT/EP2014/067007
(87) Internationale Veröffentlichungsnummer: WO 2015/032582

(56) Entgegenhaltungen:
- DE-A1- 1 918 917
- DE-A1-102010 062 269
- DE-U1-202007 005 987
- FR-A1- 2 355 735
- JP-U- H0 542 020
- US-A1- 2008 073 246

## Beschreibung

Die Erfindung betrifft eine Scheibenwischvorrichtung für ein Fahrzeug, insbesondere ein Kraftfahrzeug, weiterhin insbesondere ein Verfahren zur Verringerung von Materialkriechprozessen einer Scheibenwischvorrichtung.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischerarm über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen. Es gilt bei Wischvorrichtungen für Fahrzeuge dabei zu berücksichtigen, dass der Kostendruck stetig steigt und dass die Fahrzeuge in einer Vielzahl von klimatischen Bedingungen zum Einsatz kommen können, so dass z.B. extreme Temperaturwerte dauerhaft und/oder mit großen Schwankungen auftreten. Zudem verändern sich aufgrund von äußeren Einflüssen über die Lebensdauer einer Scheibenwischvorrichtung die Materialeigenschaften wie z.B. die Flexibilität, die Steifigkeit etc., so dass die Funktion der Scheibenwischvorrichtung negativ beeinflusst wird.

Dokument DE1918917 A1 offenbart ein Wischblatt mit einem langgestreckten Oberteil, das zumindest teilweise biegbar ausgestaltet ist, einem langgestreckten Unterteil, das zumindest teilweise biegbar ausgestaltet ist, und mehreren Verbindungselementen zum Verbinden des Oberteils und des Unterteils, wobei die Verbindungselemente entlang einer Längserstreckung des Wischblatts voneinander beabstandet sind, und wobei die Verbindungselemente ausgelegt sind, um eine Bewegung des Oberteils und des Unterteils relativ zu einander mit einer Bewegungskomponente entlang einer Längserstreckung des Wischblatts zu ermöglichen.

### Offenbarung der Erfindung

Es ist die Aufgabe der vorliegenden Erfindung, eine Scheibenwischvorrichtung bereitzustellen, mit welcher zumindest einer oder mehrere der oben genannten Nachteile verringert werden oder im Wesentlichen nicht auftreten und/oder mit welcher ein zuverlässiges, weitgehend schlierenfreies Wischen einer Scheibe eines Fahrzeugs gewährleisten wird.
Diese Aufgabe wird durch die Gegenstände der unabhängigen Ansprüche gelöst.

Gemäß einem Aspekt der vorliegenden Erfindung wird ein Verfahren zur Verringerung von Materialkriechprozessen einer Scheibenwischvorrichtung vorgeschlagen. Das Verfahren umfasst ein Bereitstellen einer Scheibenwischvorrichtung für ein Fahrzeug, insbesondere ein Kraftfahrzeug. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Ferner umfasst das Verfahren ein Belasten der Scheibenwischvorrichtung vor Endmontage der Scheibenwischvorrichtung an einem Fahrzeug, so dass nach Endmontage der Scheibenwischvorrichtung ein primäres Kriechverhalten der Scheibenwischvorrichtung im Wesentlichen, insbesondere um mindestens 80%, reduziert ist.

Gemäß einem weiteren Aspekt der vorliegenden Erfindung wird eine Form zum Vorspannen einer Scheibenwischvorrichtung für ein Fahrzeug, insbesondere ein Kraftfahrzeug, vorgeschlagen. Dabei ist die Form konfiguriert, um eine in die Form eingelegte Scheibenwischvorrichtung mit einem Belastungsprofil entlang der Längserstreckung des Wischblatts vorzuspannen, so dass eine Bewegung eines Oberteils der Scheibenwischvorrichtung und eines Unterteils der Scheibenwischvorrichtung relativ zu einander mit einer Bewegungskomponente entlang einer Längserstreckung des Wischblatts bewirkt wird.

Gemäß einem weiteren Aspekt der vorliegenden Erfindung wird eine Scheibenwischvorrichtung für ein Fahrzeug, insbesondere ein Kraftfahrzeug vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Ferner sind die Verbindungselemente über jeweils ein erstes Filmscharnier mit dem Oberteil und/oder über jeweils ein zweites Filmscharnier mit dem Unterteil verbunden, wobei das erste Filmscharnier und/oder das zweite Filmscharnier konfiguriert sind, so dass ein Kriechen des langgestreckten Oberteils und/oder des langgestreckten Unterteils durch ein Kriechen des ersten Filmscharniers und/oder des zweite Filmscharniers im Wesentlichen kompensiert wird.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß dem hierin beschriebenen Ausführungsformen des Verfahrens zur Verringerung von Materialkriechprozessen einer Scheibenwischvorrichtung können Materialkriechprozessen einer Scheibenwischvorrichtung, insbesondere einer Fin-Ray Scheibenwischvorrichtung effektiv reduziert werden. Insbesondere kann ein primäres Kriechverhalten, nach Endmontage der Scheibenwischvorrichtung an einem Fahrzeug effektiv reduziert werden.

Ferner wird durch die hierein beschriebenen Ausführungsformen der Form zum Vorspannen einer Scheibenwischvorrichtung für ein Fahrzeug ein einfaches und kostengünstiges Werkzeug zur Verfügung gestellt, um Materialkriechprozesse einer Scheibenwischvorrichtung, insbesondere ein primäres Kriechverhalten, nach Endmontage der Scheibenwischvorrichtung an einem Fahrzeug effektiv zu reduzieren.

Darüber ermöglichen die hierein beschriebenen Ausführungsformen der Scheibenwischvorrichtung vorteilhafterweise eine besonders gute Anpassung der Scheibenwischvorrichtung an die Krümmung einer Scheibe. Nicht gewischte Bereiche der Scheibe und eine Schleierbildung auf der Scheibe können weitgehend vermieden werden. Ferner wird durch die konstruktive Ausgestaltung der hierin beschriebenen Scheibenwischvorrichtung, bei welcher das erste Filmscharnier und/oder zweite Filmscharnier so konfiguriert sind, dass ein Kriechen des langgestreckten Oberteils und/ oder des langgestreckten Unterteils durch ein Kriechen des ersten Filmscharniers und/oder des zweite Filmscharniers im Wesentlichen kompensiert wird, eine Scheibenwischvorrichtung bereitgestellt, welche während ihres Einsatzes im Wesentlichen konstante Materialeigenschaften aufweist, so dass eine hohe und konstante Wischqualität der Scheibenwischvorrichtung gewährleistet werden kann.

Gemäß Ausführungsformen des Verfahrens zur Verringerung von Materialkriechprozessen, die mit anderen Ausführungsformen kombiniert werden können, umfasst das Belasten der Scheibenwischvorrichtung ein mechanisches Belasten mit einer Belastungsrichtung umfasst, welche im Wesentlichen quer zur Längserstreckung des Wischblatts verläuft, so dass eine Bewegung des Oberteils und des Unterteils relativ zu einander mit einer Bewegungskomponente entlang einer Längserstreckung des Wischblatts bewirkt wird. Dadurch können Materialkriechprozesse einer Scheibenwischvorrichtung, insbesondere ein primäres Kriechverhalten, nach Endmontage der Scheibenwischvorrichtung an einem Fahrzeug effektiv reduziert werden.

Gemäß Ausführungsformen des Verfahrens zur Verringerung von Materialkriechprozessen, die mit anderen Ausführungsformen kombiniert werden können, umfasst das mechanische Belasten ein Belastungsprofil entlang der Längserstreckung des Wischblatts, wobei das Belastungsprofil zu einem Ende der Scheibenwischvorrichtung hin abnimmt. Somit können Materialkriechprozesse einer Scheibenwischvorrichtung entlang der Längserstreckung des Wischblatts reduziert werden, insbesondere kann das Verfahren über die Wahl des Belastungsprofils an die Konfiguration der Scheibenwischvorrichtung angepasst werden.

Gemäß Ausführungsformen des Verfahrens zur Verringerung von Materialkriechprozessen, die mit anderen Ausführungsformen kombiniert werden können, umfasst das Belasten der Scheibenwischvorrichtung ein Einlegen der Scheibenwischvorrichtung in eine Form, wobei die Form konfiguriert ist, um die Scheibenwischvorrichtung vorzuspannen. Dadurch wird ein einfaches und kostengünstiges Verfahren zur Verringerung von Materialkriechprozessen einer Scheibenwischvorrichtung bereitgestellt

Gemäß Ausführungsformen des Verfahrens, die mit anderen Ausführungsformen kombiniert werden können, umfasst das Belasten der Scheibenwischvorrichtung eine Belastungsdauer von mindestens 200 Stunden, insbesondere mindestens 300 Stunden, insbesondere mindestens 400 Stunden. Somit kann das Verfahren über die Wahl der Belastungsdauer an die Konfiguration der Scheibenwischvorrichtung angepasst werden.

Gemäß Ausführungsformen des Verfahrens, die mit anderen Ausführungsformen kombiniert werden können, bei welchen das Belasten der Scheibenwischvorrichtung ein Einlegen der Scheibenwischvorrichtung in eine Form umfasst, um die Scheibenwischvorrichtung vorzuspannen, kann die Form eine Verpackung der Scheibenwischvorrichtung sein. Dadurch kann das Vorspannen der Scheibenwischvorrichtung zur Reduzierung des primären Kriechverhaltens bei der Auslieferung oder Lagerung der Scheibenwischvorrichtungen durchgeführt werden, so dass das Vorspannen keinen extra Fertigungsschritt erfordert, für welchen zusätzliche Werkzeuge und Kapazitäten notwendig wären.

Gemäß Ausführungsformen des Verfahrens, die mit anderen Ausführungsformen kombiniert werden können, umfasst das Belasten der Scheibenwischvorrichtung ein thermisches Belasten der Scheibenwischvorrichtung. Somit können Materialkriechprozesse einer Scheibenwischvorrichtung, insbesondere ein primäres Kriechverhalten, nach Endmontage der Scheibenwischvorrichtung an einem Fahrzeug effektiv reduzieret werden.

Gemäß Ausführungsformen des Verfahrens, die mit anderen Ausführungsformen, bei welchen ein thermisches Belasten der Scheibenwischvorrichtung durchgeführt wird, kombiniert werden können, umfasst das thermische Belasten ein zeitliches Temperaturprofil, insbesondere ein zeitliches Intervalltemperaturprofil. Somit kann das Verfahren über die Wahl des zeitlichen Temperaturprofils an die Konfiguration der Scheibenwischvorrichtung angepasst werden, so dass Materialkriechprozesse effektiv reduziert werden.

Gemäß Ausführungsformen des Verfahrens, die mit anderen Ausführungsformen, bei welchen ein thermisches Belasten der Scheibenwischvorrichtung durchgeführt wird, kombiniert werden können, umfasst das thermische Belasten eine Belastungsdauer von mindestens 10 min, insbesondere mindestens 20 min, insbesondere mindestens 30 min. Somit kann das Verfahren über die Wahl der thermischen Belastungsdauer an die Konfiguration der Scheibenwischvorrichtung angepasst werden, so dass Materialkriechprozesse effektiv reduziert werden.

Gemäß Ausführungsformen des Verfahrens, die mit anderen Ausführungsformen, bei welchen ein thermisches Belasten der Scheibenwischvorrichtung durchgeführt wird, kombiniert werden können, wird das thermische Belasten bei einer Temperatur durchgeführt wird, welche im Wesentlichen einem Wert 0,1-fachem bis 0, 3-fachen, insbesondere einem Wert des 0,1-fachen, insbesondere des 0,2-fachen, insbesondere des 0,3-fachen der Schmelztemperatur des für die Scheibenwischvorrichtung verwendeten Materials entspricht. Somit kann das Verfahren über die Wahl der Temperatur an die Konfiguration der Scheibenwischvorrichtung angepasst werden, so dass Materialkriechprozesse effektiv reduziert werden.

### Kurze Beschreibung der Zeichnungen

Ausführungsbeispiele der Erfindung sind in den Figuren dargestellt und werden im Folgenden näher beschrieben. Es zeigen:
Figur 1 ein Ablaufdiagramm zur Illustration von Ausführungsformen des Verfahrens zur Verringerung von Materialkriechprozessen einer Scheibenwischvorrichtung gemäß Ausführungsformen der Offenbarung
Figur 2 eine schematische Darstellung eines Wischblatts einer Scheibenwischvorrichtung gemäß Ausführungsformen der Offenbarung,
Figur 3 eine schematische Darstellung einer Form zum Vorspannen einer Scheibenwischvorrichtung gemäß Ausführungsformen der Offenbarung,
Figur 4 eine schematische Darstellung eines Belastungsprofils entlang der Längserstreckung des Wischblatts bei einem mechanischen Belasten gemäß Ausführungsformen des Verfahrens zur Verringerung von Materialkriechprozesse einer Scheibenwischvorrichtung,
Figur 5 eine schematische Darstellung von Kriechkurven für drei verschieden konstante Spannungen σ₁, σ₂, und σ₃,
Figur 6A eine schematische Darstellung eines Wischblatts einer Scheibenwischvorrichtung gemäß Ausführungsformen der Offenbarung in einer Grundstellung,
Figur 6B eine schematische Darstellung des Wischblatts einer Scheibenwischvorrichtung gemäß Ausführungsformen der Offenbarung nach Fig. 6A in einer an eine Scheibe angelegten Stellung,
Figur 7A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 7B eine schematische Darstellung des Wischerarms mit integriertem Wischblatt nach Fig. 7A in einer an eine Scheibe angelegten Stellung,
Figur 8 eine schematische perspektivische Darstellung eines Wischerarms einer Scheibenwischvorrichtung gemäß Ausführungsformen der Offenbarung,
Figur 9A eine schematische Darstellung eines Ausschnitts des Wischblatts nach Fig. 7A,
Figur 9B eine schematische Darstellung eines Ausschnitts des Wischblatts nach Fig. 7B.

### Ausführungsformen der Erfindung

Im Folgenden werden, sofern nicht anders vermerkt, für gleiche und gleichwirkende Elemente gleiche Bezugszeichen verwendet.

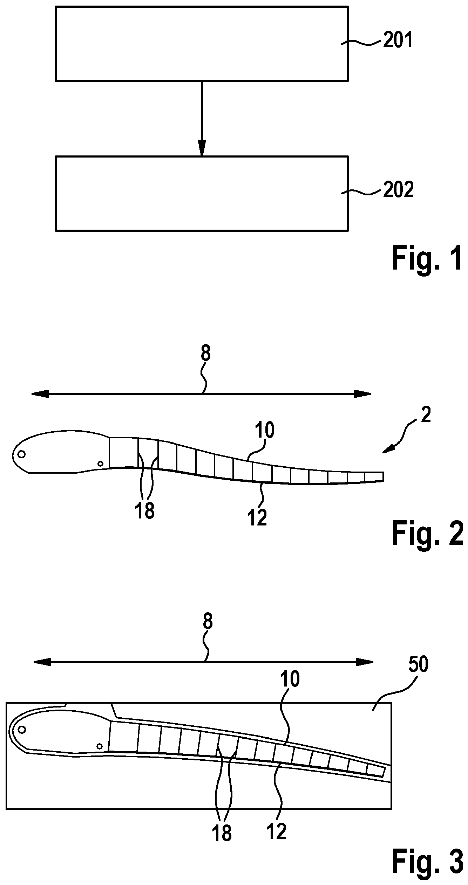

Wie in dem in Figur 1 dargestellten Ablaufdiagramm gezeigt ist, umfasst das Verfahren zur Verringerung von Materialkriechprozessen einer Scheibenwischvorrichtung gemäß hierin beschriebenen Ausführungsformen ein Bereitstellen 201 einer Scheibenwischvorrichtung für ein Fahrzeug, insbesondere ein Kraftfahrzeug. Die Scheibenwischvorrichtung umfasst ein Wischblatt 2, wie es beispielhaft in Figur 2 dargestellt ist. Das Wischblatt 2 weist typischerweise ein langgestrecktes Oberteil 10 und ein langgestrecktes Unterteil 12 auf, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts zu ermöglichen. Ferner umfasst das Verfahren, wie es beispielhaft in dem in Figur 1 dargestellten Ablaufdiagramm gezeigt ist, ein Belasten 202 der Scheibenwischvorrichtung vor Endmontage der Scheibenwischvorrichtung an einem Fahrzeug, so dass nach Endmontage der Scheibenwischvorrichtung ein primäres Kriechverhalten der Scheibenwischvorrichtung um mindestens 80%, insbesondere um mindestens 90%,insbesondere um mindestens 95% reduziert ist.

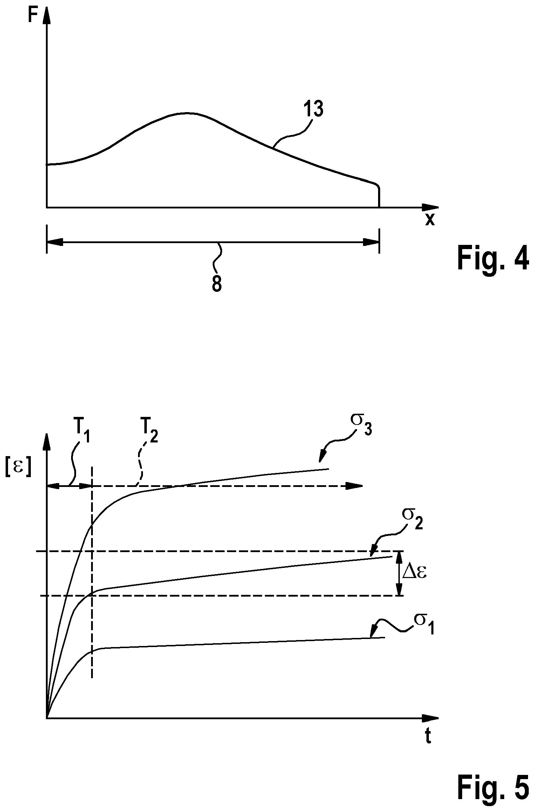

Zur Erläuterung des Begriffs "primäres Kriechverhalten", wie er in der vorliegenden Anmeldung verwendet wird, wird im Folgenden kurz allgemein das Kriecherhalten von Werkstoffen beschrieben. Als Kriechen bezeichnet man die zeitabhängige, plastische Verformung eines Werkstoffs unter Last. Belastet man ein Bauteil so nimmt die Dehnung des Bauteils bei konstanter Spannung mit der Zeit zu. Dies ist schematisch in den in Fig. 5 dargestellten Kriechkurven dargestellt.

Zu Beginn der Belastung reagiert das Bauteil mit einer sofortigen, zeitunabhängigen Dehnung, die sich ihrerseits aus einem elastischen in einem plastischen Anteil zusammensetzt. Die die Dehnung nimmt dann im Lauf der Zeit weiter zu, wobei sich die die Dehngeschwindigkeit zunächst stark verändert und meist stetig abnimmt. Diesen Bereich der Kriechkurve bezeichnet man entsprechend als Übergangskriechen oder primäres Kriechen. Dieser Bereich in welchem der Werkstoff ein primäres Kriechverhalten zeigt entspricht in Fig. 5 dem Bereich der mit der Zeitspanne T₁ gekennzeichnet ist. Daran schließt sich der Bereich des stationären oder sekundären Kriechens an, indem die Dehngeschwindigkeit näherungsweise konstant ist. Der Bereich in welchem der Werkstoff ein sekundäres Kriechverhalten zeigt entspricht in Fig. 5 dem Bereich der mit der Zeitspanne T₂ gekennzeichnet ist.

Gemäß Ausführungsformen des Verfahrens, die mit anderen Ausführungsformen kombiniert werden können, umfasst das Belasten 202 der Scheibenwischvorrichtung ein mechanisches Belasten mit einer Belastungsrichtung, welche im Wesentlichen quer zur Längserstreckung 8 des Wischblatts verläuft, so dass eine Bewegung des Oberteils 10 und des Unterteils relativ zu einander mit einer Bewegungskomponente entlang einer Längserstreckung 8 des Wischblatts bewirkt wird.

Gemäß Ausführungsformen des Verfahrens, die mit anderen Ausführungsformen kombiniert werden können, umfasst das mechanische Belasten ein Belastungsprofil 13 entlang der Längserstreckung 8 des Wischblatts, wobei das Belastungsprofil 13 zu einem Ende der Scheibenwischvorrichtung hin abnimmt. In Figur 4 ist ein beispielhaftes Belastungsprofil entlang der Längserstreckung des Wischblatts schematisch dargestellt.

Gemäß Ausführungsformen des Verfahrens, die mit anderen Ausführungsformen kombiniert werden können, umfasst das Belasten 202 der Scheibenwischvorrichtung ein Einlegen der Scheibenwischvorrichtung in eine Form 50, wie sie beispielhaft in Figur 3 dargestellt ist. Die Form 50 ist konfiguriert, um die Scheibenwischvorrichtung vorzuspannen. Mit anderen Worten, die Form 50 ist typischerweise so konfiguriert, dass nach dem Einlegen der Scheibenwischvorrichtung in die Form 50, die Schiebenwischvorrichtung in der Form 50 einer mechanischen Belastung ausgesetzt ist.

Gemäß typischen Ausführungsformen ist die Form 50 konfiguriert, um eine in die Form eingelegte Scheibenwischvorrichtung mit einem Belastungsprofil 13, wie es beispielhaft in Fig. 4 dargestellt ist, entlang der Längserstreckung 8 des Wischblatts vorzuspannen, so dass eine Bewegung eines Oberteils 10 der Scheibenwischvorrichtung und eines Unterteils der Scheibenwischvorrichtung relativ zu einander mit einer Bewegungskomponente entlang einer Längserstreckung 8 des Wischblatts bewirkt wird. Typischerweise ist verläuft die Wirkungsrichtung des Belastungsprofils 13 im Wesentlichen quer zur Längserstreckung 8 des Wischblatts 2.

Gemäß Ausführungsformen des Verfahrens, die mit anderen Ausführungsformen kombiniert werden können, kann die Form 50 zum Vorspannen der Scheibenwischvorrichtung eine Verpackung für die Scheibenwischvorrichtung sein. Dadurch kann das Vorspannen der Scheibenwischvorrichtung zur Reduzierung des primären Kriechverhaltens bei der Auslieferung oder Lagerung der Scheibenwischvorrichtungen durchgeführt werden, so dass das Vorspannen keinen extra Fertigungsschritt erfordert, für welchen zusätzliche Werkzeuge und Kapazitäten notwendig wären. Somit kann auf einfache und kostengünstige Weise das primäre Kriechverhalten nach Endmontage der Scheibenwischvorrichtung, wie sie beispielhaft in der vorliegenden Anmeldung beschrieben ist, reduziert werden.

Gemäß Ausführungsformen des Verfahrens, die mit anderen Ausführungsformen kombiniert werden können, umfasst das Belasten 202 der Scheibenwischvorrichtung eine Belastung von mindestens 10 MPa, insbesondere mindestens 20 MPa, insbesondere mindestens 30 MPa.

Gemäß Ausführungsformen des Verfahrens, die mit anderen Ausführungsformen kombiniert werden können, umfasst das Belasten 202 der Scheibenwischvorrichtung eine Belastungsdauer von mindestens 200 Stunden, insbesondere mindestens 300 Stunden, insbesondere mindestens 400 Stunden.

In Fig. 5 sind beispielhafte Kriechkurven der hierin beschriebenen Scheibenwischvorrichtung für drei verschiedene Belastungen σ₁, σ₂, und σ₃, dargestellt. Der mit T₁ gekennzeichnete Bereich in Fig. 5 stellt den Zeitbereich der Kriechkurven dar, in welchem bei der Scheibenwischvorrichtung ein primäres Kriechverhalten auftritt. Der mit T₂ gekennzeichnete Bereich stellt den Zeitbereich der Kriechkurven dar, in welchem bei der Scheibenwischvorrichtung ein sekundäres Kriechverhalten auftritt. Wie in Fig. 5 dargestellt ist, ist in dem Zeitbereich der Kriechkurven des sekundären Kriechverhaltens die Dehngeschwindigkeit näherungsweise konstant und die Dehnungsänderung Δε im Vergleich zur Dehnungsänderung im Zeitbereich T₁ des primären Kriechverhaltens relativ gering. Gemäß Ausführungsformen des hierin beschriebenen Verfahrens zur Verringerung von Materialkriechprozessen einer Scheibenwischvorrichtung, wird die Scheibenwischvorrichtung vor Endmontage der Scheibenwischvorrichtung an einem Fahrzeug, so belastet dass nach Endmontage der Scheibenwischvorrichtung ein primäres Kriechverhalten der Scheibenwischvorrichtung im Wesentlichen reduziert ist. Mit anderen Worten, nach der Endmontage der Scheibenwischvorrichtung an einem Fahrzeug zeigt die Scheibenwischvorrichtung gemäß den hierin beschriebenen Ausführungsformen vorwiegend ein sekundäres Kriechverhalten.

Gemäß Ausführungsformen des Verfahrens, die mit anderen Ausführungsformen kombiniert werden können, kann das Belasten 202 der Scheibenwischvorrichtung ein thermisches Belasten der Scheibenwischvorrichtung umfassen. Das thermische Belasten kann ein zeitliches Temperaturprofil, insbesondere ein zeitliches Intervalltemperaturprofil umfassen.

Gemäß Ausführungsformen des Verfahrens, die mit anderen Ausführungsformen kombiniert werden können, umfasst das thermische Belasten eine Belastungsdauer von mindestens 10 min, insbesondere mindestens 20 min, insbesondere mindestens 30 min. Das thermische Belasten kann kontinuierlich oder in Intervallen erfolgen. Typischerweise wird das thermische Belasten bei einer Temperatur durchgeführt, welche im Wesentlichen einem Wert des 0,1-fachem bis 0, 3-fachen, zum Beispiel einem Wert des 0,1-fachen, insbesondere des 0,2-fachen, insbesondere des 0,3-fachen der Schmelztemperatur des für die Scheibenwischvorrichtung verwendeten Materials entspricht.

Gemäß typischen Ausführungsformen der Scheibenwischvorrichtung, welche mit anderen Ausführungsformen kombiniert werden können, ist die Scheibenwischvorrichtung aus einem oder mehreren Materialen aus einer Gruppe bestehend aus: PP, PE, POM, PA, TPE (Thermoplastischem Elastomer), beispielsweise TPE-S, TPE-O, TPE-U, TPE-A TPE-V und TPE-E hergestellt sein.

Im Folgenden wird eine beispielhafte Scheibenwischvorrichtung beschrieben, für welche das hierein beschriebene Verfahren zur Verringerung von Materialkriechprozessen besonders vorteilhaft ist. Prinzipiell, kann das hierein beschriebene Verfahren jedoch auch für andere Scheibenwischvorrichtung verwendet werden.

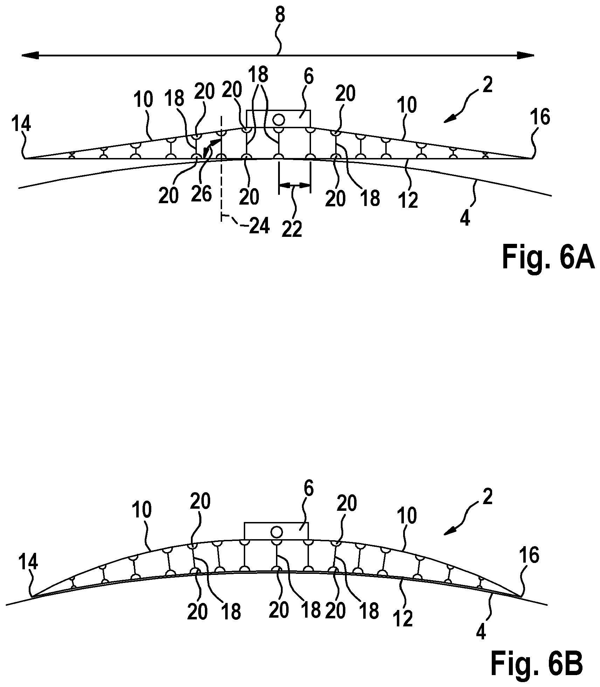

Figuren 6A und 6B zeigen schematische Darstellungen eines Wischblatts 2 in einer Grundstellung (Figur 6A) und in einer an eine Scheibe angelegten Stellung (Figur 6B) gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 6A in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in den Figuren 6A und 6B exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 10 zweiteilig ausgestaltet, wobei dann jeweils ein Ende der beiden Teile des zweiteiligen Oberteils 10 an der Halterung 6 befestigt sind.

Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere. Insbesondere können die Drehgelenke 20 als Filmscharniere ausgebildet sein. Dies ist vor allem dann vorteilhaft, wenn Oberteil 10, Unterteil 12 und/oder Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen das Gelenk durch ein Filmscharnier zur Verfügung gestellt ist, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

In Figur 6A ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 65° und 115°, insbesondere zwischen 75° und 105°, liegen. Besonders vorteilhaft liegen die Winkel zwischen 80° und 100°. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Entsprechendes gilt für die Befestigungen der Verbindungselemente 18 an dem Oberteil 10.

In der Fig. 6A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 6A einen Doppelkeil aus, wobei die Spitzen der beiden Keile in entgegengesetzte Richtungen weisen. Die Verbindungselemente 18 sind knicksteif ausgeführt.

Fig. 6B zeigt eine schematische Darstellung des Wischblatts 2 nach Fig. 6A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 6B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich typischerweise an der dem Oberteil 10 abgewandten Unterseite des Unterteils 12 eine Wischlippe, welche zum Wischen auf der Scheibe 4 aufsetzt. Aus Gründen der Übersichtlichkeit ist die Wischlippe in den Figuren 6A und 6B nicht dargestellt.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

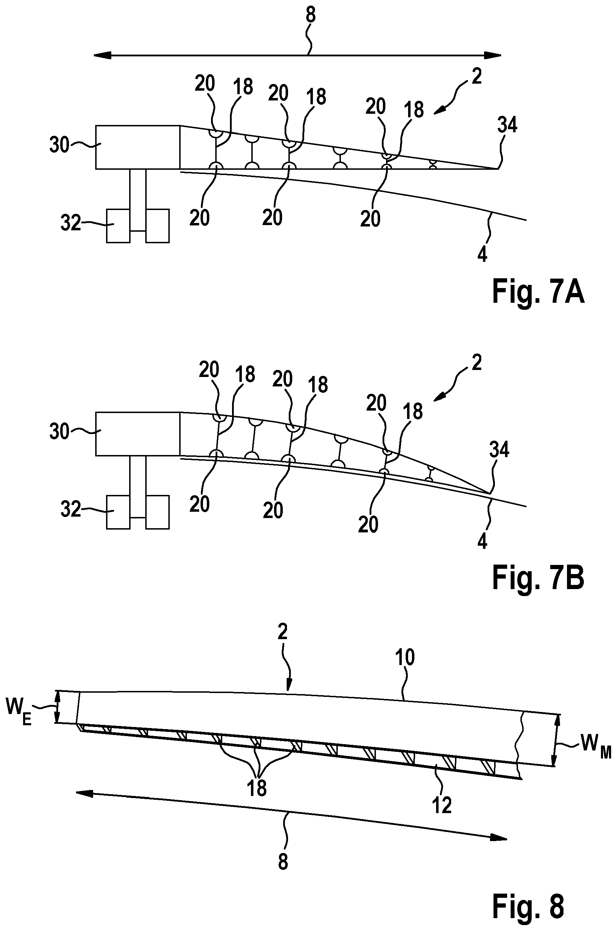

Figuren 6A und 6B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 6A und 6B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 7A und 7B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 7A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 2, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 2 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 7A prinzipiell derjenigen nach Fig. 6A.

Fig. 7B zeigt eine schematische Darstellung des Wischblatts 2 mit integriertem Wischerarm 30 nach Fig. 6B in einer an die Scheibe 4 angelegten Stellung. Auch hier wirken von unten aus der Richtung der Scheibe 4 Druckkräfte auf das Unterteil 12 des Wischblatts 2, so dass sich das Unterteil 12 und das Oberteil 10 in Richtung der Scheibe 4 biegen.

Sowohl in FIG. 6A als auch in FIG. 7A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Figur 8 eine schematische perspektivische Darstellung eines Wischblatts 2 einer Scheibenwischvorrichtung gemäß Ausführungsformen der Offenbarung. Wie in Figur 8 dargestellt ist, weist das Wischblatt 2 an den äußeren Verbindungspositionen, an welchem die Enden des langgestreckten Oberteils 10 und des Unterteils 12 miteinander verbunden sind eine äußere Breite W_{E} auf. Gemäß typischen Ausführungsformen ist die äußere Breite W_{E} mindestens 15 mm, insbesondere mindestens 20 mm, insbesondere mindestens 25 mm.

Gemäß Ausführungsformen der Offenbarung, die mit anderen Ausführungsformen kombiniert werden können, nimmt die Breite des Wischblatts 2 von den äußeren Verbindungspositionen in Richtung des Befestigungsteils 30 oder der Halterung 6, an der das Wischblatt an dem Scheibenwischerarm befestigt werden kann, zu. In Figur 8 ist beispielhaft eine innere Breite mit W_{M} bezeichnet. Gemäß typischen Ausführungsformen ist die innere Breite W_{M} mindestens 20 mm, insbesondere mindestens 25 mm, insbesondere mindestens 30 mm.

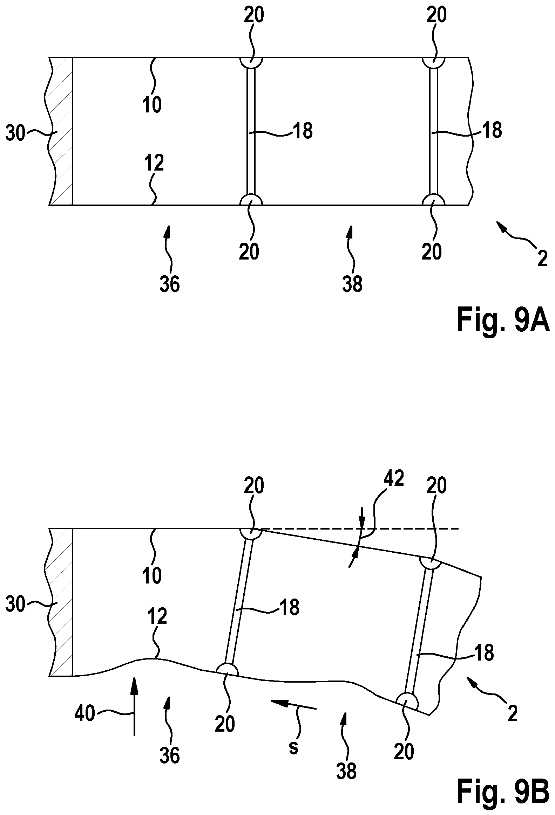

Fig. 9A zeigt eine schematische Darstellung eines Ausschnitts des Wischblatts 2 gemäß dem Ausführungsbeispiel nach Fig. 7A, in dem sich das Wischblatt 2 in der Grundstellung befindet. Dargestellt ist der linke Endbereich des Wischblatts 2, in dem ein Ende des Oberteils 10 und ein Ende des Unterteils 12 an dem Befestigungsteil 30 befestigt sind. Fig. 9A zeigt ausgehend von dem Übergang vom Befestigungsteil 30 zu dem Wischblatt 2 die ersten beiden Verbindungselemente 18, die zwei Wischblattelemente 36 und 38 begrenzen. Die Verbindungselemente 18 sind über Drehgelenke 20 an dem Oberteil 10 und dem Unterteil 12 befestigt.

Fig. 9B zeigt eine schematische Darstellung eines Ausschnitts des Wischblatts 2 gemäß dem Ausführungsbeispiel nach Fig. 7B, in dem das Wischblatt 2 an die Scheibe 4 angelegt ist. Es wirken von unten aus Richtung der Scheibe Druckkräfte auf das Unterteil 12. Stellvertretend für die Druckkräfte ist in der Fig. 9B eine Drucckraft 40 dargestellt. Die Druckkraft 40 bewirkt ein Wölben und Verbiegen des Unterteils 12 des Wischblattelements 36. Dadurch wird das Drehgelenk 20 des ersten Verbindungselements 18 um einen Weg s nach links verschoben. Das zweite Wischblattelement 38 biegt sich nach unten in die Richtung, aus der die Druckkraft 40 kommt, und schmiegt sich an die Scheibe an. Dabei entsteht zwischen dem ersten Wischblattelement 36 und dem zweiten Wischblattelement 38 ein Winkel 42. Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 2.

Gemäß einem weiteren Aspekt der vorliegenden Erfindung ist die Scheibenwischvorrichtung, wie sie beispielhaft in Verbindung mit den Figuren 6A bis 9B beschrieben ist, derart konfiguriert, dass ein Kriechen des langgestreckten Oberteils 10 und/oder des langgestreckten Unterteils 12 durch ein Kriechen der Filmscharniere im Wesentlichen kompensiert wird.

Gemäß dem hierin beschriebenen Verfahren können Materialkriechprozessen einer Scheibenwischvorrichtung, insbesondere einer Fin-Ray Scheibenwischvorrichtung Können Materialkriechprozesse, insbesondere ein primäres Kriechverhalten, nach Endmontage der Scheibenwischvorrichtung an einem Fahrzeug effektiv reduziert werden. Somit kann eine Scheibenwischvorrichtung bereitgestellt werden, welche während ihres Einsatzes im Wesentlichen konstante Materialeigenschaften aufweist, so dass eine hohe und konstante Wischqualität der Scheibenwischvorrichtung gewährleistet werden kann.

## Patentansprüche

1. Verfahren zur Verringerung von Materialkriechprozessen einer Scheibenwischvorrichtung, umfassend:
- Bereitstellen (201) einer Scheibenwischvorrichtung für ein Fahrzeug, insbesondere ein Kraftfahrzeug, umfassend ein Wischblatt (2) mit einem langgestreckten Oberteil (10), das zumindest teilweise biegbar ausgestaltet ist, einem langgestreckten Unterteil (12), das zumindest teilweise biegbar ausgestaltet ist, und mehreren Verbindungselementen (18) zum Verbinden des Oberteils (10) und des Unterteils (12), wobei die Verbindungselemente (18) entlang einer Längserstreckung (8) des Wischblatts voneinander beabstandet sind, und wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts zu ermöglichen,
- Belasten (202) der Scheibenwischvorrichtung vor Endmontage der Scheibenwischvorrichtung an einem Fahrzeug, so dass nach Endmontage der Scheibenwischvorrichtung ein primäres Kriechverhalten der Scheibenwischvorrichtung im Wesentlichen, insbesondere um mindestens 80%, reduziert ist.

2. Verfahren nach Anspruch 1, wobei das Belasten (202) der Scheibenwischvorrichtung ein mechanisches Belasten mit einer Belastungsrichtung umfasst, welche im Wesentlichen quer zur Längserstreckung (8) des Wischblatts verläuft, so dass eine Bewegung des Oberteils (10) und des Unterteils relativ zu einander mit einer Bewegungskomponente entlang einer Längserstreckung (8) des Wischblatts bewirkt wird.

3. Verfahren nach Anspruch 1 oder 2, wobei das mechanische Belasten ein Belastungsprofil (13) entlang der Längserstreckung (8) des Wischblatts umfasst, wobei das Belastungsprofil (13) zu einem Ende der Scheibenwischvorrichtung hin abnimmt.

4. Verfahren nach einem der Ansprüche 1 bis 3, wobei das Belasten (202) der Scheibenwischvorrichtung ein Einlegen der Scheibenwischvorrichtung in eine Form (50) umfasst, wobei die Form konfiguriert ist, um die Scheibenwischvorrichtung vorzuspannen.

5. Verfahren nach einem der Ansprüche 1 bis 4, wobei das Belasten (202) eine Belastungsdauer von mindestens 200 Stunden, insbesondere mindestens 300 Stunden, insbesondere mindestens 400 Stunden umfasst.

6. Verfahren nach Anspruch 4 bzw. Anspruch 5, wenn Anspruch 5 von Anspruch 4 abhängt, wobei die Form (50) eine Verpackung der Scheibenwischvorrichtung ist.

7. Verfahren nach Anspruch 1 bis 5, wobei das Belasten (202) der Scheibenwischvorrichtung ein thermisches Belasten der Scheibenwischvorrichtung umfasst.

8. Verfahren nach Anspruch 7, wobei das thermische Belasten ein zeitliches Temperaturprofil, insbesondere ein zeitliches Intervalltemperaturprofil, umfasst.

9. Verfahren nach Anspruch 7 oder 8, wobei das thermische Belasten eine Belastungsdauer von mindestens 10 min, insbesondere mindestens 20 min, insbesondere mindestens 30 min umfasst.

10. Verfahren nach einem der Ansprüche 7 bis 9, wobei das thermische Belasten bei einer Temperatur durchgeführt wird, welche im Wesentlichen einem Wert 0,1-fachem bis 0, 3-fachen, insbesondere einem Wert des 0,1-fachen, insbesondere des 0,2-fachen, insbesondere des 0,3-fachen der Schmelztemperatur des für die Scheibenwischvorrichtung verwendeten Materials entspricht.

## Claims

1. Method for reducing material creep processes of a windshield wiper device, comprising:
- providing (201) a windshield wiper device for a vehicle, in particular a motor vehicle, comprising a wiper blade (2) with an elongate upper part (10) which is designed to be at least partially flexible, an elongate lower part (12) which is designed to be at least partially flexible, and multiple connecting elements (18) for connecting the upper part (10) and the lower part (12), wherein the connecting elements (18) are spaced apart from one another along a longitudinal extent (8) of the wiper blade, and wherein the connecting elements (18) are designed to permit a movement of the upper part (10) and of the lower part relative to one another with a movement component along a longitudinal extent (8) of the wiper blade,
- loading (202) the windshield wiper device before final installation of the windshield wiper device on a vehicle, such that, after final installation of the windshield wiper device, a primary creep behavior of the windshield wiper device is substantially reduced, in particular by at least 80%.

2. Method according to Claim 1, wherein the loading (202) of the windshield wiper device comprises mechanical loading in a loading direction running substantially transversely with respect to the longitudinal extent (8) of the wiper blade, such that a movement of the upper part (10) and of the lower part relative to one another with a movement component along a longitudinal extent (8) of the wiper blade is effected.

3. Method according to Claim 1 or 2, wherein the mechanical loading comprises a loading profile (13) along the longitudinal extent (8) of the wiper blade, wherein the loading profile (13) decreases toward one end of the windshield wiper device.

4. Method according to one of Claims 1 to 3, wherein the loading (202) of the windshield wiper device comprises the windshield wiper device being placed into a mold (50), wherein the mold is configured so as to preload the windshield wiper device.

5. Method according to one of Claims 1 to 4, wherein the loading (202) comprises a loading duration of at least 200 hours, in particular at least 300 hours, in particular at least 400 hours.

6. Method according to either of Claim 4 or 5, when Claim 5 is dependent on Claim 4, wherein the mold (50) is a packaging of the windshield wiper device.

7. Method according to Claims 1 to 5, wherein the loading (202) of the windshield wiper device comprises thermal loading of the windshield wiper device.

8. Method according to Claim 7, wherein the thermal loading comprises a temperature profile with respect to time, in particular an interval temperature profile with respect to time.

9. Method according to Claim 7 or 8, wherein the thermal loading comprises a loading duration of at least 10 minutes, in particular at least 20 minutes, in particular at least 30 minutes.

10. Method according to one of Claims 7 to 9, wherein the thermal loading is performed at a temperature which corresponds substantially to a value of 0.1 times to 0.3 times, in particular a value of 0.1 times, in particular of 0.2 times, in particular of 0.3 times, the melting temperature of the material used for the windshield wiper device.

## Revendications

1. Procédé pour réduire les processus de fluage du matériau d'un dispositif d'essuie-glace, comprenant les étapes suivantes :
- préparer (201) un dispositif d'essuie-glace pour un véhicule, en particulier un véhicule automobile, comprenant un balai d'essuie-glace (2) avec une partie supérieure allongée (10), qui est au moins partiellement flexible, une partie inférieure allongée (12), qui est au moins partiellement flexible, et plusieurs éléments de liaison (18) pour relier la partie supérieure (10) et la partie inférieure (12), dans lequel les éléments de liaison (18) sont espacés l'un de l'autre le long d'une extension longitudinale (8) du balai d'essuie-glace et dans lequel les éléments de liaison (18) sont conçus pour permettre un mouvement de la partie supérieure (10) et de la partie inférieure l'une par rapport à l'autre avec une composante du mouvement le long de l'extension longitudinale (8) du balai d'essuie-glace,
- charger (202) le dispositif d'essuie-glace avant le montage final du dispositif d'essuie-glace sur un véhicule, de telle manière qu'après le montage final du dispositif d'essuie-glace un comportement au fluage primaire du dispositif d'essuie-glace soit essentiellement réduit, en particulier d'au moins 80 %.

2. Procédé selon la revendication 1, dans lequel le chargement (202) du dispositif d'essuie-glace comprend un chargement mécanique avec une direction de charge, qui s'étend essentiellement transversalement à l'extension longitudinale (8) du balai d'essuie-glace, de telle manière qu'un mouvement de la partie supérieure (10) et de la partie inférieure l'une par rapport à l'autre soit exécuté avec une composante du mouvement le long de l'extension longitudinale (8) du balai d'essuie-glace.

3. Procédé selon une revendication 1 ou 2, dans lequel le chargement mécanique comprend un profil de charge (13) le long de l'extension longitudinale (8) du balai d'essuie-glace, dans lequel le profil de charge (13) diminue en direction d'une extrémité du dispositif d'essuie-glace.

4. Procédé selon l'une quelconque des revendications 1 à 3, dans lequel le chargement (202) du dispositif d'essuie-glace comprend l'introduction du dispositif d'essuie-glace dans une forme (50), dans lequel la forme est configurée pour précontraindre le dispositif d'essuie-glace.

5. Procédé selon l'une quelconque des revendications 1 à 4, dans lequel le chargement (202) comprend une durée de chargement d'au moins 200 heures, en particulier d'au moins 300 heures, en particulier d'au moins 400 heures.

6. Procédé selon la revendication 4, ou selon la revendication 5 lorsque la revendication 5 dépend de la revendication 4, dans lequel la forme (50) est un emballage du dispositif d'essuie-glace.

7. Procédé selon une revendication 1 à 5, dans lequel le chargement (202) du dispositif d'essuie-glace comprend un chargement thermique du dispositif d'essuie-glace.

8. Procédé selon la revendication 7, dans lequel le chargement thermique comprend un profil de température temporel, en particulier un profil de température avec intervalles de temps.

9. Procédé selon la revendication 7 ou 8, dans lequel le chargement thermique comprend une durée de chargement d'au moins 10 min, en particulier d'au moins 20 min, et en particulier encore d'au moins 30 min.

10. Procédé selon l'une quelconque des revendications 7 à 9, dans lequel on effectue le chargement thermique à une température, qui correspond essentiellement à une valeur de 0,1 fois à 0,3 fois, en particulier à une valeur de 0,1 fois, en particulier de 0,2 fois, en particulier encore de 0,3 fois la température de fusion du matériau utilisé pour le dispositif d'essuie-glace.
